# FASCICULE DE BREVET EUROPEEN

(11) **EP 1 350 981 B1**
(45) Date de publication et mention de la délivrance du brevet: **21.05.2008**
(21) Numéro de dépôt: 03005518.0
(22) Date de dépôt: 11.03.2003
(51) Int. Cl.: F16D 65/18

(54) **Frein de stationnement pour véhicule et son dispositif de commande**
Kraftfahrzeug-Feststellbremse und Steuerung dafür
Vehicle parking brake and control device therefore

(30) Priorité: 19.03.2002 FR 0203411
(43) Date de publication de la demande: 08.10.2003
(73) Titulaire: ROBERT BOSCH GMBH, 70442 Stuttgart (DE)
(72) Inventeur: Boisseau, Jean-Pierre, 75014 Paris (FR)
(74) Mandataire: Hurwic, Aleksander Wiktor

(56) Documents cités:
- WO-A-01/34991
- DE-A- 19 853 721
- DE-U- 20 111 250
- US-A- 3 964 806
- US-A1- 2001 030 086

## Description

La présente invention concerne un dispositif de frein de stationnement, ou frein à mains, pour véhicule automobile.

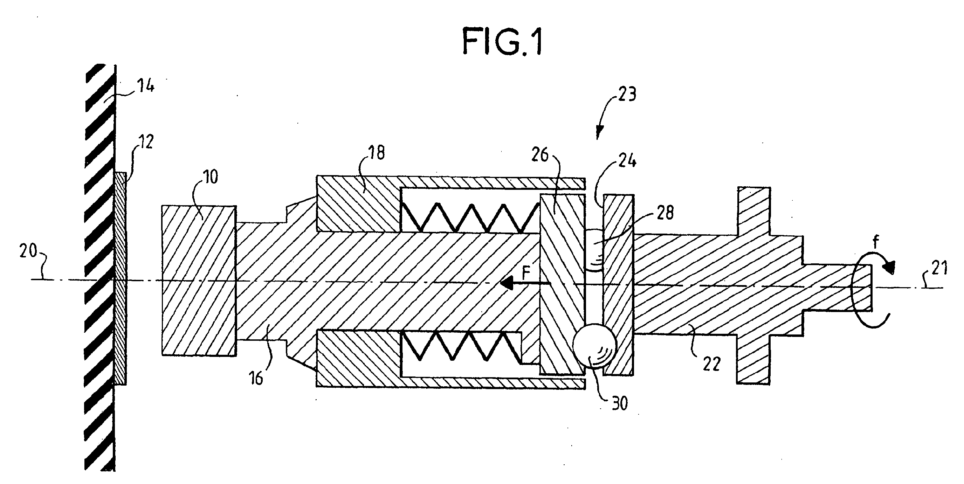

Un frein de stationnement est destiné à immobiliser un véhicule. A cet effet, il comprend une plaquette 10 (figure 1) de frein pouvant être appliquée contre un disque 12 solidaire d'une roue 14.

Afin de contrôler l'application contre le disque 12 de la plaquette 10, cette dernière est solidaire d'une tige 16 coulissant à l'intérieur d'un étrier 18 suivant un axe 20 perpendiculaire au plan du disque 12. Selon le sens du coulissement de la tige 16, la plaquette 10 est amenée contre le disque 12 ou éloignée de ce dernier.

La commande du coulissement de la tige 16 est effectuée par l'utilisateur du véhicule au moyen d'un levier (non représenté) de frein à main situé dans l'habitacle. Ce levier est relié à un arbre 22, lui-même solidaire d'un dispositif 23 de transformation de mouvement comportant des plateaux 24 et 26 fixés, respectivement, à l'arbre 22 et à la tige 16, et trois billes maintenues entre ces plateaux 24 et 26. Seules 2 billes 28 et 30 sont représentées dans la figure 1 pour des raisons de clarté.

L'arbre 22 et le plateau 24 sont immobiles en translation mais libres en rotation autour d'un axe 21 colinéaire à l'axe 20. Le plateau 26, solidaire de la tige 16, est immobile en rotation mais libre en translation le long de l'axe 20.

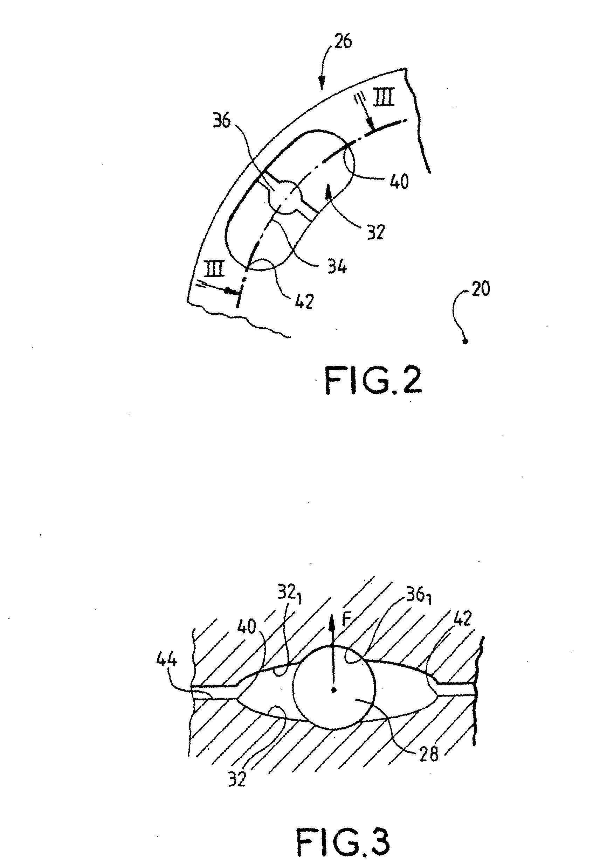

Chacun des plateaux 24 et 26 présente trois rampes disposées régulièrement autour des axes colinéaires 20 et 21. Ces rampes présentent la forme d'alvéoles ou d'évidements qui sont représentés sur les figures 2 et 3. La figure 2 montre une vue de face d'un plateau, par exemple le plateau 26, perpendiculairement à l'axe 20. L'évidement 32 présente un axe longitudinal moyen 34 formant un arc de cercle centré sur l'axe 20, et, sensiblement au centre de cet arc de cercle, il comporte un renfoncement 36 comme montré sur la figure 3 qui est une coupe selon l'axe III/III' de la figure 2.

La bille 28 est emprisonnée entre l'évidement 32 du plateau 26 et l'évidement correspondant 32₁ du plateau 24. En position de repos, c'est-à-dire lorsque le frein de stationnement n'est pas actionné, la bille 28 s'appuie dans les renfoncements 36 et 36₁ des évidements respectifs 32 et 32₁.

Pour actionner le frein de stationnement, on prévoit une commande qui confère un mouvement de rotation à l'arbre 22 et au plateau 24 afin qu'ils tournent autour de l'axe 21. Dans ces conditions, le plateau 24 étant immobile en translation, la bille roule au fond de l'évidement 32 et se rapproche de l'extrémité 40 ou 42 (figure 2), c'est-à-dire de la partie plane 44 du plateau 26. Il en résulte que la bille 26 repousse le plateau 26 dans le sens de la flèche F (figure 1).

Un tel dispositif transformant l'effort de rotation en un effort de translation fonctionne correctement si les billes suivent les lignes moyennes 34 de chacun des évidements ou empreintes 32. Cependant, il n'en est pas ainsi quand les axes 20 et 21 des plateaux ne sont pas alignés, soit du fait du fonctionnement même du frein et/ou de son usure, soit du fait des tolérances de fabrication. On a ainsi constaté que lorsque les billes ne suivent pas la ligne 34, il se produit des coincements, ce qui conduit à exercer des efforts plus importants pour commander le frein de stationnement. En outre, les efforts entraînent un écrouissage du métal constituant les plateaux, c'est-à-dire une déformation de ces plateaux et donc une amplification des efforts à exercer.

De plus, lorsque les axes 20 et 21 des plateaux 24 et 26 ne sont pas colinéaires, ces plateaux exercent des pressions distinctes sur les billes 28 et 30.

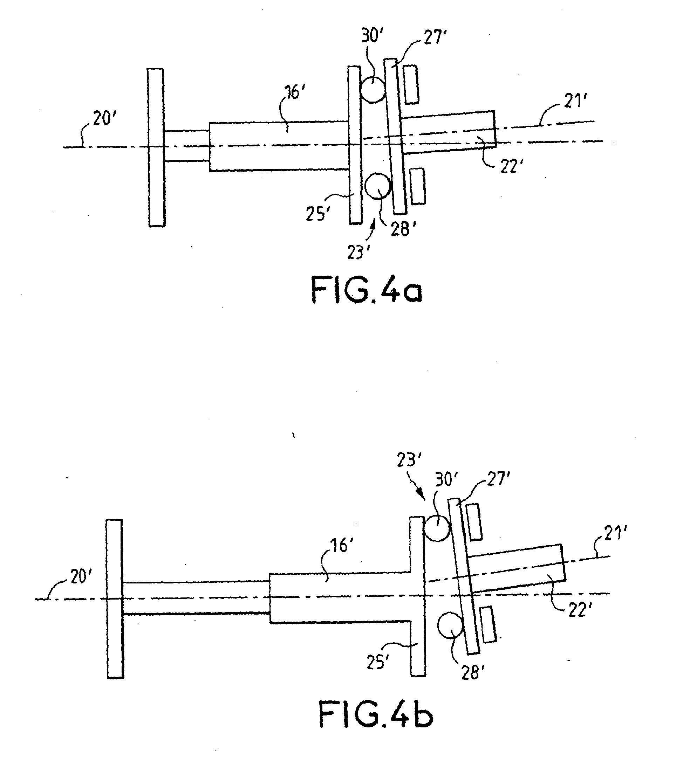

Une telle situation est représentée dans la figure 4a où un arbre 22' et une tige 16', analogues à l'arbre 22 et à la tige 16 de la figure 1, sont situés suivant des axes respectifs 21' et 20' non colinéaires. Lors de la transformation d'un mouvement de rotation de l'arbre 22' en un mouvement de translation de la tige 16', les plateaux 25' et 27', respectivement analogues aux plateaux 26 et 24 de la figure 1, exercent des contraintes différentes sur les billes 28' et 30' du dispositif 23' à billes.

De fait, la distance entre les plateaux 27' et 25' augmente au niveau de la bille 28' qui ne subit alors que des faibles contraintes de la part de ces plateaux. A l'opposé, la bille 30' est soumise à des contraintes élevées par un effet de pincement entre ces plateaux 25' et 27'.

Une telle différence de contraintes entraîne une usure accrue de la bille 30' et des évidements qui la maintiennent par rapport à la bille 28' et à son dispositif de maintien. Or cette différence d'usure augmente les risques de dysfonctionnement déjà mentionnés (coincements du dispositif et écrouissage du métal) et, en conséquence, la non colinéarité entre les axes 20 et 21 (figure 4b).

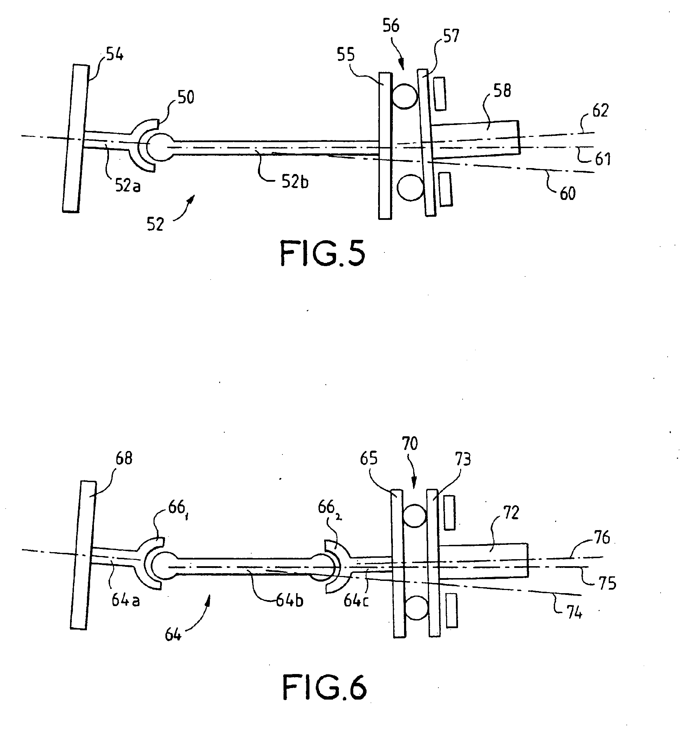

Pour traiter ces inconvénients, il est connu d'utiliser des moyens pour permettre le pivotement du plateau 25' solidaire de la tige 16' par rapport à l'axe 20' de cette dernière, comme décrit ci-dessus à l'aide de la figure 5. Lors de cette description, les moyens de pivotement sont considérés et représentés comme une liaison de type rotule.

Un élément 50 pivotant, dénommé par la suite liaison 50, est prévu dans un ensemble 52 ayant un rôle analogue à celui de la tige 16 de la figure 1. Ainsi, l'ensemble 52 est composé d'une partie 52ₐ, comprise entre la liaison 50 et la plaquette 54 de frein associée à l'ensemble 52, et une partie 52_{b} comprise entre la liaison 50 et le dispositif 56 à billes transformant le mouvement de rotation d'un arbre 58 en une translation de l'ensemble 52. Le dispositif 56 à billes est analogue au dispositif 23 de la figure 1 et il fait appel à un plateau 55, solidaire de l'ensemble 52, et à un plateau 57, solidaire de l'arbre 58.

Lorsque l'ensemble 52 est aligné suivant un axe 60 non colinéaire à l'axe 62 de l'arbre 58, la liaison 50 permet le maintien du segment 52ₐ suivant l'axe 60 tandis que l'action exercée par le plateau 57 sur le plateau 55 tend à aligner l'axe 61 du segment 52_{b} avec l'axe 62 de l'arbre 58. En conséquence, les axes 61 et 62 des plateaux 55 et 57 tendent à s'aligner.

La présente invention résulte de la constatation que l'utilisation d'un seul élément 50 pivotant est insuffisante pour compenser entièrement un défaut d'alignement entre les axes 61 et 62 des plateaux 55 et 57. En effet, en fonction du déplacement de la tige 52_{b}, le décalage entre les axes respectifs 61 et 62 des plateaux 55 et 57 est plus ou moins compensé par l'élément 50 pivotant. En d'autres termes, seule une unique position de la tige 52b assure un alignement des axes 61 et 62 et un maintien correct des billes par les plateaux 55 et 57.

Un tel dispositif est connu par example de DE-A-19853721.

Dans ce cas, les contraintes exercées par ces plateaux 55 et 57 sur ces billes du dispositif de transformation restent différentes et provoquent les dysfonctionnements précédemment mentionnés.

C'est pourquoi, l'invention concerne un dispositif de frein à main comprenant un dispositif à billes pour commander la translation d'une tige et d'une plaquette solidaire de cette dernière par la rotation d'un arbre, les billes étant comprises entre un premier plateau solidaire de la tige et un deuxième plateau solidaire de l'arbre, et comprenant des premiers moyens pour permettre le pivotement du premier plateau par rapport à la plaquette, caractérisé en ce qu'il comprend des seconds moyens de pivotement permettant de maintenir sensiblement constantes les contraintes exercées par les plateaux sur les billes malgré le pivotement du premier plateau par rapport à la plaquette.

Grâce à ces seconds moyens de pivotement, les effets d'un défaut de colinéarité entre la tige et l'arbre d'un dispositif de frein sont corrigés de telle sorte que les billes sont correctement maintenues par les plateaux. Les risques de dysfonctionnements tels que précédemment mentionnés sont alors fortement réduits ou éliminés.

Dans une réalisation, les seconds moyens de pivotement sont situés sur la tige et sont tels qu'ils permettent de maintenir sensiblement parallèles le premier et le second plateaux.

Selon un mode de réalisation, les moyens de pivotement comprennent un élément de plus faible section que la tige.

Dans une réalisation, les seconds moyens de pivotement comportent deux billes situées entre le premier et le second plateaux, l'axe de pivotement de ces seconds moyens étant constitué par la ligne joignant le centre des deux billes.

D'autres caractéristiques et avantages de l'invention apparaîtront avec la description faite ci-dessous, à titre descriptif et non limitatif, effectuée en faisant référence aux dessins ci-après sur lesquels :
La figure 1, déjà décrite, représente un dispositif de frein à main connu,
les figures 2 et 3, déjà décrites, sont des schémas de dispositifs à billes connus,
les figures 4a et 4b, déjà décrites, sont des schémas de dispositifs de frein connus présentant des défauts d'alignement,
la figure 5, déjà décrite, est un schéma fonctionnel d'un dispositif de freins à main connu,
la figure 6 est un schéma fonctionnel d'un dispositif de frein à main conforme à l'invention,
la figure 7 représente une première réalisation de l'invention,
les figures 8a, 8b et 9 représentent des schémas d'une seconde réalisation de l'invention.

Sur la figure 6 est représenté un dispositif 64 de frein à main conforme à l'invention. Il comprend deux éléments 66₁ et 66₂ pivotant analogues à l'élément 50 pivotant précédemment décrit. Les éléments 66₁ et 66₂ divisent l'ensemble 64 en trois segments : un premier segment 64ₐ, compris entre une plaquette 68 de frein et l'élément 661, un second segment 64_{b}, compris entre les éléments 66₁ et 66₂, et un troisième segment 64_{c} compris entre l'élément 66₂ et le dispositif 70 à billes transformant le mouvement de rotation d'un arbre 72 en un mouvement de translation de l'ensemble 64.

L'utilisation de deux éléments pivotants 66₁ et 66₂ permet l'alignement des axes des plateaux 73 et 65, respectivement solidaires de l'arbre 72 et de l'ensemble 64. Dès lors, le dispositif à billes fonctionne correctement malgré le défaut d'alignement de l'ensemble 64 et de l'arbre 72.

Les éléments 66₁ et 66₂ pivotants peuvent être réalisés de diverses façons. Dans une réalisation, l'élément pivotant est obtenu en prévoyant une plus faible section dans une tige.

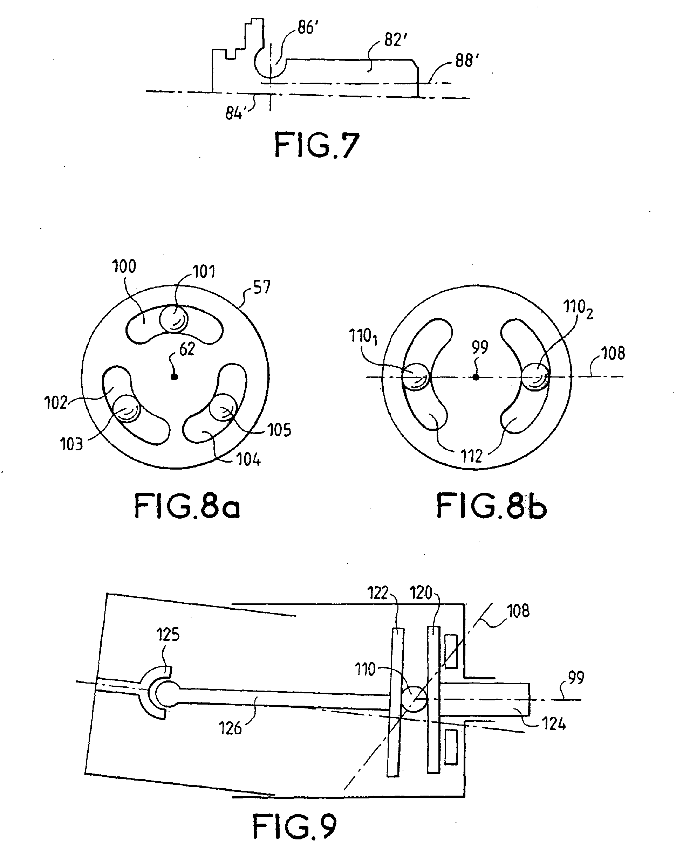

À cet effet, dans l'exemple représenté sur la figure 7, une tige 82' présente un évidement périphérique 86' qui permet la pivotement de la tige 82' lorsque des contraintes suivant des axes 84' et 88' non colinéaires sont exercées à ses extrémités.

Dans une autre réalisation de l'invention, on utilise une modification du dispositif à billes décrite ci-dessous à l'aide des figures 8a, 8b et 9.

Sur la figure 8a est représentée une vue du plateau 57 du dispositif de frein à main connu de la figure 5a selon son axe 62. On y distingue trois évidements 100, 102 et 104 dans lesquels sont maintenus, respectivement, les billes 101, 103 et 105.

Dans cette réalisation de l'invention, on remplace le dispositif connu à trois billes par un dispositif à 2 billes 110₁, 110₂ (figure 8b) tel que les deux billes utilisées définissent une liaison pivotante entre les plateaux du dispositif de frein à main. Ainsi, la disposition des évidements 112 de ces billes à la surface des plateaux est symétrique par rapport à l'axe 99 du plateau.

Dans un dispositif conforme à cette réalisation, les contraintes exercées par les plateaux 120 et 122 (figure 9) sur chacune des billes 110₁ et 110₂ sont identiques et indépendantes d'un défaut d'alignement entre l'arbre 124 et la tige 126 et assurent, notamment, le maintien des billes 110₁ et 110₂ entre les plateaux 120 et 122 du dispositif.

## Revendications

1. Dispositif (64) de frein à main comprenant un dispositif (70) à billes (110) pour commander la translation d'une tige (64a, 64b, 64c;126) et d'une plaquette (68) solidaire de cette dernière par la rotation d'un arbre (72;124), les billes étant comprises entre un premier plateau (65;122) solidaire de la tige et un deuxième plateau (73;120) solidaire de l'arbre, et comprenant des premiers moyens (66₁;125) pour permettre le pivotement du premier plateau (65;122) par rapport à la plaquette (68), **caractérisé en ce qu'**il comprend des seconds moyens (66₂;110) de pivotement permettant de maintenir sensiblement constantes les contraintes exercées par les plateaux (65,73 ;122,120) sur les billes (110) malgré le pivotement du premier (65;122) plateau par rapport à la plaquette (68).

2. Dispositif selon la revendication 1 **caractérisé en ce que** les seconds moyens (66₂) de pivotement sont situés sur la tige (64a, 64b, 64c) et sont tels qu'ils permettent de maintenir sensiblement parallèles le premier (65) et le second (73) plateaux.

3. Dispositif selon la revendication 1 ou 2 **caractérisé en ce que** les seconds moyens (66₂) de pivotement comprennent un élément (82') de plus faible section que la tige.

4. Dispositif selon la revendication 1 **caractérisé en ce que** les seconds moyens (110) de pivotement comportent deux billes (110) situées entre le premier (122) et le second (120) plateaux, l'axe de pivotement de ces seconds moyens étant constitué par un axe (108) passant par le centre de ces billes (110).

## Claims

1. A handbrake device (64) comprising a ball device (70) provided with balls (110) for causing a rod (64a, 64b, 64c, 126) and a pad (68) that is secured to said rod to move in translation when a shaft (72; 124) is turned, the balls lying between a first plate (65; 122) secured to the rod and a second plate (73; 120) secured to the shaft, said handbrake device also comprising first means (66₁; 125) for enabling the first plate (65; 122) to pivot relative to the pad (68), said handbrake device being **characterized in that** it further comprises second pivot means (66₂; 110) making it possible for the stresses exerted by the plates (65, 73; 122, 120) on the balls (110) to be maintained constant in spite of the first plate (65; 122) pivoting relative to the pad (68).

2. A device according to claim 1, **characterized in that** the second pivot means (66₂) are situated on the rod (64a, 64b, 64c) and are such that they make it possible for the first plate (65) and the second plate (73) to be maintained substantially parallel to each other.

3. A device according to claim 1 or claim 2, **characterized in that** the second pivot means (66₂) comprise an element (82') of cross-section that is smaller than the cross-section of the rod.

4. A device according to claim 1, **characterized in that** the second pivot means (110) comprise two balls (110) situated between the first plate (122) and the second plate (120), the pivot axis of said second means being constituted by an axis (108) passing through the centers of said balls (110).

## Patentansprüche

1. Handbremsvorrichtung (64) mit einer Vorrichtung (70) mit Kugeln (110) zur Steuerung der Translationsbewegung einer Stange (64a, 64b, 64c; 126) und eines mit dieser Stange fest verbundenen Bremsklotzes (68) durch Drehung einer Welle (72; 124), wobei die Kugeln zwischen einer ersten, mit der Stange fest verbundenen Platte (65; 122) und einer zweiten, mit der Welle fest verbundenen Platte (73; 120) angeordnet sind, wobei die Vorrichtung erste Mittel (66₁; 125) aufweist, um die Schwenkbewegung der ersten Platte (65; 122) bezüglich des Bremsklotzes (68) zu gestatten, **dadurch gekennzeichnet, dass** sie zweite Schwenkmittel (66₂; 110) aufweist, die es ermöglichen, die von den Platten (65, 73; 122, 120) auf die Kugeln (110) ausgeübten Spannungen trotz der Schwenkbewegung der ersten Platte (65; 122) bezüglich des Bremsklotzes (68) im Wesentlichen konstant zu halten.

2. Vorrichtung nach Anspruch 1, **dadurch gekennzeichnet, dass** die zweiten Schwenkmittel (66₂) an der Stange (64a, 64b, 64c) angeordnet und derart sind, dass sie es ermöglichen, die erste Platte (65) und die zweite Platte (73) im Wesentlichen parallel zu halten.

3. Vorrichtung nach Anspruch 1 oder 2, **dadurch gekennzeichnet, dass** die zweiten Schwenkmittel (66₂) ein Element (82') aufweisen, dessen Querschnitt kleiner ist als derjenige der Stange.

4. Vorrichtung nach Anspruch 1, **dadurch gekennzeichnet, dass** die zweiten Schwenkmittel (110) zwei Kugeln (110) zwischen der ersten Platte (122) und der zweiten Platte (120) aufweisen, wobei die Schwenkachse dieser zweiten Mittel durch eine Achse (108) gebildet ist, die durch die Mitte dieser Kugeln (110) verläuft.
